# EUROPEAN PATENT APPLICATION

(11) **EP 0 820 916 A1**
(43) Date of publication of application: **28.01.1998**
(21) Application number: 97810501.3
(22) Date of filing: 17.07.1997
(51) Int. Cl.: B62D 23/00

(54) **Tridimensional frame for a vehicle**

(30) Priority: 24.07.1996 CH 1849/96
(71) Applicant: C & C Exima, 6926 Montagnola (CH)
(72) Inventor: Carrubba, Enzo, Dr.-Ing., 6926 Montagnola (CH)
(74) Representative: Gaggini, Carlo, Dipl.-Ing.

(57) **Abstract**

Tridimensional frame for vehicles, in particular motor cars, made by at least two elementary structural members (2,3,4) drawn from multifigure extruded hollow profiles (10,31) which are splitted along at least one of their generatrix as to form a plurality of hollow profiles which, cutted at one right length, are angle bended and connected among them, at their free ends, to make the frame. This connection of the elementary structural members (2,3,4) takes place following the invention, in respect to the known technology of the State of the Art, without adding any other complementary fixing element.

In one preferred embodiment of the invention, the extruded multifigure hollow profile (10) is made by two tubes (21) with axial symmetrical section, connected by a flange (22).

The characteristics of the invention allow to make tridimensional frames which are simple, stiff and do not require complex assembly jigs and that are therefore suitable for production of small series vehicles.

## Description

This invention regards a tridimensional frame for vehicles, with a particular regard for motor car vehicles and motorcycles vehicles.

A tridimensional frame for a motor vehicle comprising a whole of structural metallic tubular members (girders) having a transverse uniform section along the axis connected by connections composed with elements having a semi-shell shape and made out of thin steel sheets. This construction is already known in the state of the art and described, for example, in Patent US N° 4.355.844; all fixing elements are provided with longitudinal flanges on which is possible to depone a welding rib, which allows to tighten the structure.

Another construction of tridimensional frame is described in EP-A-0146716. The described tridimensional frame includes the structural longitudinal members made out of light metal extruded hollow profiles, the connecting nodes which present a shape corresponding to the shape of the structural members and having optionally parts which protrude or intrude in a way to be able to fix other body parts of the vehicle; moreover there are considered other parts realised by stamping of different materials (light metals, steel, plastic), which complete the frame structure.

In SE-A-120799 it is shown a principle of assembly to realise a structural frame (chassis) for a vehicle, consisting in the joining U profiles on a central frame having an oval shape and which have a transverse closed section (box profile), where the additional U profiles which partially surround the resulting composed frame, are attached to realise the longitudinal front and rear members of the frame.

Finally the assembly of a tridimensional frame which uses some elementary members made out of a light alloy profile, it is known in the state of the art and described in EP-0389588B1. There is described a method to realise a motor car vehicle tridimensional frame that uses a lightweight metal extruded profile to obtain the front and rear structures, some structures in elevation and to create the fitting of secondary complementary added members which complete the front and rear structures of the tridimensional frame.

The secondary complementary added members are connected to the primary members using a surface which is obtained on the mentioned longitudinal members of the tridimensional frame, cutting longitudinally the primary structural member. Moreover by another cutting operation of the longitudinal primary structural members, the cross connections of the frame are realised.

All the tridimensional frames described so far, and which represent the state of the art of industrial methodologies to realise a tridimensional frame for motor car vehicle, do not solve one of the most important issue of vehicle construction: the reduction and unification (as long as reasonably possible) of the number of components, necessary for the assembly of the mentioned tridimensional frames.

This fact ought to reduce the amount of investments due for a large series production and it allows to satisfy the request for some niche models, being possible to realise small series of vehicles in a flexible way. Moreover with the techniques considered so far, it is not possible to make the fixing for the most important systems (i.e. suspensions) without adding other components to the structure: finally the characteristics of front and side impact resistance are anyway influenced by the quality of several joints, which are realised by mean of weldings or bonding and which sometimes are located in some critical areas of the structure.

The production of a series of elementary components, over than cost increase for tooling, makes also necessary to build some high-cost assembly jigs and, generally, as much complex assembly methods for the whole tridimensional frame.

It is important do not forget that the complexity of the system generally goes with a weight increase of the vehicle, which is a determining factor for the selection of the engine power and the final cost of the vehicle.

It is scope of the present invention to provide a tridimensional frame for vehicles which is easy to assembly, light, that does not require complex assembly jigs, with few connection joints, none of which situated in particularly critical areas of the frame and which offers at the same time all the requirements of structural strength and impact resistance, necessary for a vehicle of large series production. Moreover the tridimensional frame object of the present invention gives a valid answer to the need of effectively transforming the tridimensional frame of a vehicle, to give a fast and flexible answer to the needs of different architecture of the vehicle itself. All these principles are valid for a motor car vehicle, for a motorcycle vehicle or for any other type of vehicle which needs a tridimensional frame to which is left the task of bearing the loads applied to the vehicle.

Another scope of the present invention is to propose a frame the construction of which is based on the simple connection of elementary structural members, obtained using specific profiles made with lightweigh materials and that do not require further elements of reinforcement: all members are having the same relevance under the aspect of structural resistance and assembling.

Another scope is of being able to assembly a tridimensional frame using a mature techonology, very simple and which offers advantages conceming a correct use of natural resources for the production of elementary members and for a suitable (and smaller) energy consumption during vehicle lifetime; moreover with the proposed technology, it is granted the complete recyclability of the structure at the end of vehicle life.

According with the present invention the said and other objectives can be reached according with the claims 1 to 12 and, after some specific construction shapes making a tridimensional frame for a vehicle, whose main structure is made with elementary structural members able to bear static and dynamic loads and where the said structural members include some multifigure profiles having hollow axial symmetrical sections, that are splitted along the connecting flanges (lying on the generatrix of the same profile) of different figure, cutted to the dimension and bended, to make the single structural members of the tridimensional frame which are then interconnected between them.

All structural elementary members can be obtained from a single profile; other preferred construction embodiments need to use two elementary profiles.

In one particularly advantageous embodiment of the invention, the multifigure profile is cuttend along the flange which connects the different figures, that lies on the generatrix of the same profile, in one or more individual sections: the different sections are then bended in the most suitable directions of the space to make the elementary sub-components of the tridimensional frame.

In one another preferred embodiment of the invention, the multi figure profile is provided with the adequate number of different figures that are splitted along the connecting flanges (lying on the generatrix of the same profiles) and used to make, by bending, the different structural elementary members, necessary to make the tridimensional frame, to locate or to support the different sub-macrosystems of the vehicle and to build the impact resistant structure.

With respect with to the common methods to make a tridimenional frame, the connection of different structural elementary members results very much simplified and it does not need other than simple joining elements of proper shape and which are inserted and glued in the interior of the cavity of the single figures obtained with a longitudinal split of the original profile: there is no necessity for complex assembly jigs; moreover the given configuration of the join itself, offers a high level of safety both under the point of view of construction and under the point of view of the intrinsic stiffness of the joint.

The said and other objectives and characteristics of the present invention will be more clear from the following detailed description of some preferred construction embodiments and that refer to the accompanying drawings, Figs. 1 to 3, where,
Fig. 1 represents a prospect view of a tridimensional frame according to one of the preferred embodiment of the present invention;
Fig. 1A represents a magnified view of a transverse section of the elementary structural member, able to take loads, in the non splitted area;
Fig. 2 represents a prospect view according to another preferred embodiment of the tridimensional frame;
Fig. 2A represents a magnified view of another transverse section of the elementary structural member, able to take loads, in the non splitted area;
Fig. 3 represents a prospect view from the interior of the structure of another preferred embodiment of the tridimensional frame;
Fig. 3A represents one magnified view of one possible embodiment of a connecting joint of two elementary structural members.

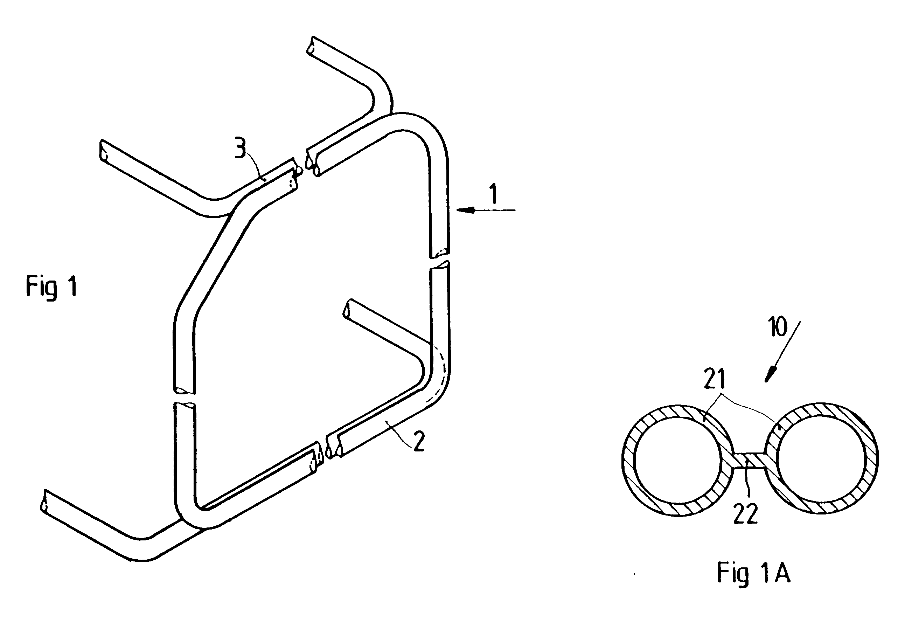

Referring to the drawings, in particular to Fig. 1, the vehicle tridimensional frame 1, shown in one perspective view of its one first construction approach, is made using different elementary structural members 2,3 of the same elementary profile, able to take the loads applied to the structure.

These members 1,2, nucleus of the tridimensional structure, are made using a multi figure profile 10, integrally extruded, having two individual cavities 21, having each a tubular shape, connected between them by mean of the flange 22, as illustrated in the detail of Fig.1A.

The two figures 21 of the profile 10 are splitted by mean of a mechanical material removal, along the generatrix of the profile, of the material 22 that connects the two sections: after that the two tubes 21 obtained, are bended at their two ends, following the directions in the space that fits at best the preferred configuration of the frame.

In this way with the use of only two elementary structural members, obtained from the same multifigure profile and which mantain a close structural connection in the non splitted areas, it is possible to make the elementary tridimensional cage for a vehicle and in particular for a motor car vehicle or a motorcycle vehicle. In the case of a motor car vehicle, for example, the structural member 2 makes the side rails together with the peripheral structure of the floorpan and the basis of the front and rear pillars of the tridimensional frame, while the structural member 3 is used to complete the door ring, to give the three quarters of the windscreen ring and to make the complete peripheral structure of the roof. (Fig. 1)

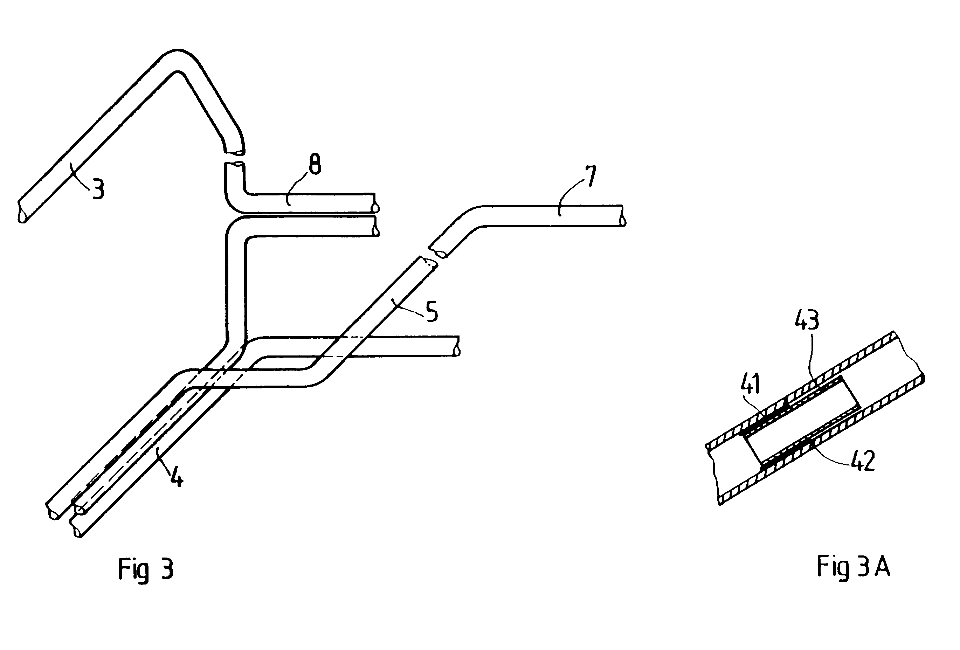

The connections of the elementary structural members 2,3 between them, and with their symmetric members, is made in a very simple way, for example using some joints having a shape that allows to insert them inside the sections to copy the intemal shape of the figure (Fig. 3A) and where, for example by mean of gluing (41) or welding (42) it is possible to connect the different elementary structural members, between them.

The joint between the two symmetric halves of the frame is on the line lying on the neutral vertical plane of the vehicle and this characteristic offers great advantages also under the point of view of the structural behaviour of the tridimensional frame.

Details of the section are shown in Fig. 1A, by which it is possible to see how the profile of the two figures represents already a very strong structure: once eliminated by material removing the "connection" (22) among the two figures (21), these are free and it is then possible their simple bending in the space, following the direction that is considered the most suitable for the architecture of the tridimensional frame.

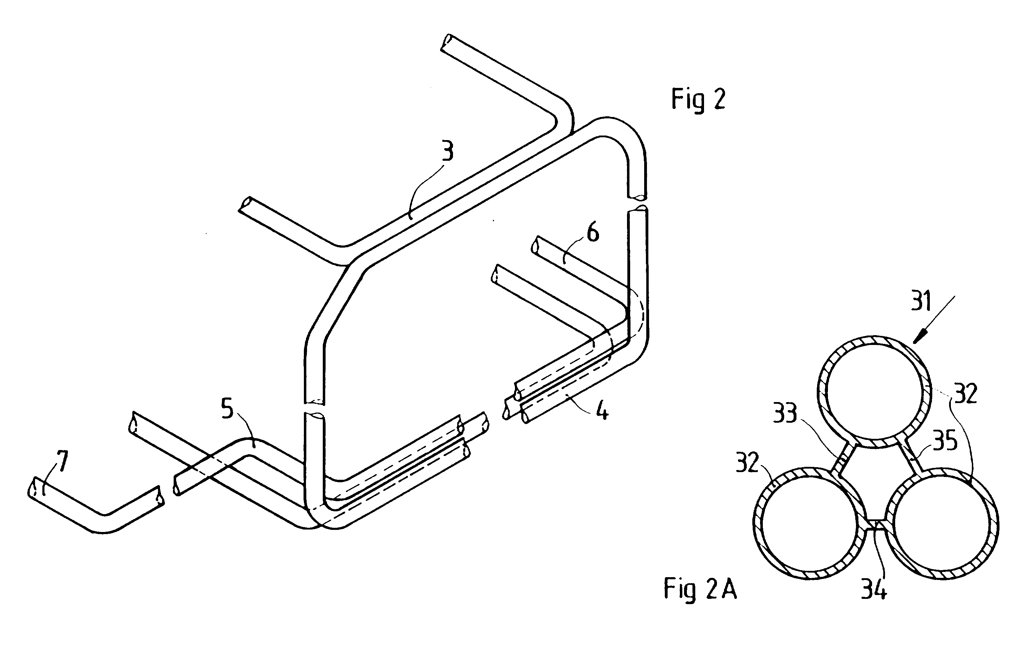

Fig. 2 shows another configuration of the tridimensional frame according with the present invention. In this case the multifigure section (Fig. 2A) shows a profile conceived in a different way: this configuration allows to realize a more complex and at the same time more complete structure. In fact it is possible to see how, also in this case, adopting the same and simple principle of a multifigure integrally extruded profile 31 it is possible to obtain the structure of the tridimensional frame.

In fact, still in the case of a tridimensional frame for a motor car vehicle, the structural member 4 forms the side rail, the peripheral structure of the floorpan, the basis of the front and rear pillars, one part of the supporting front structure 5 and the rear safety structure 6, while the meber 3, similar to what shown in Fig. 1, completes the door ring, three quarters of the windscreen ring and forms the peripheral structure of the roof.

In the Fig. 2A it is shown one of the possible configurations of the multifigure profile 31 composed by the three hollows figures 32, connected between them by mean of connecting or flanges 33,34,35, obtained during the extrusion process.

Using then a simple tubular element 7 having a convenient profile to be nested at the end, it is possible to solidly complete the front safety structure and to give, among other, a support for the mechanical parts of the vehicle.

In Fig. 3 it is shown another possible form of construction of the tridimensional frame, that uses the same multifigure profile of the Fig. 2A that allows to form also the basis of the windscreen 8, by insertion of a multifigure profile similar to this shown in Fig. 1A. The other functions are similar to what described in Fig. 2.

In Fig. 3A is shown a possible form of construction of a structural joint: the sections of two elementary structural members are connected by mean of an elementary tubular element in shape of a bush 43, that has an extemal shape corresponding to the internal section of the two profiles to be joined: once the bush 43 is inserted, the joint is made stiff, for example with an anullar welding 42 or making a structural bonding 41 that can be further fastened, for example, by means of rivets or screws.

The extremely simple way by which the whole tridimensional frame is made, according with the present invention, helps to greatly reduce the number of elementary structural members, necessary to complete the frame itself and helps to reduce the total weight of the structure; moreover, having the possibility to give to the single figures of the profile the direction in the space that better suits the architecture of the tridimensional frame, it is possible to make different configurations of the frame, changing only the bending shape of the tubular elements that form the structure. Moreover, because of the intrinsic stability given by an axial symmetrical hollow profile made using lightweight materials and bended in the space, there is no need of complex jigs for tacking and assembly.

Another specific advantage of the elementary structural members of the present invention is that because these are hollow extruded profiles, made out of lightweight materials, for example aluminium and its alloys, these members can be easily adapted to accomplish other functions. For example the profiles can be extruded with integrated supports to help the assembly of other components of the tridimensional frame, or to contain lubricating or cooling or service liquids, necessary for the vehicle.

### LIST OF FIGURES

1. Vehicle frame
2. Elementary structural members
3. Elementary structural members
4. Elementary structural members
5. Part of the front structure
6. Part of the rear structure
7. Tubular element
8. Windscreen bottom
10. Multifigure profile
21. Cavity or tube
22. Flange
31. Multifigure profile
32. Hollow figure of profile 31 or tube
33. Connection or flange
34. Connection or flange
35. Connection or flange
41. Bonding
42. Welding
43. Connecting bush

## Claims

1. tridimensional frame for vehicles made with at least two elementary structural members obtained from extruded hollow multifigure profiles (10, 31) that are splitted at least along one of their generatrix in a way to form one plurality of profiles with one or more figures each of which are then cutted at the requested length and then bended to make a predetermined angle respect to the one or more hollow profiles,
characterised by the fact that
two or more elementary structural members (2,3,4) are connected between them at their free ends to make the tridimesional frame (1) without any other complementary joining element.

2. a tridimensional frame following the claim 1,
characterised by the fact that
the extruded hollow profile (10) is made by two tubes (21) with an axial symmetrical section, connected by a flange (22) lying in the plane containing the two symmetry axes of the two tubes (21) and which are splitted by cutting the flange (22) in the middle.

3. a tridimensional frame following the claim 2,
characterised by the fact that
the two tubes have a round section.

4. a tridimensional frame following the claim 3,
characterised by the fact that
the extruded hollow multifigure profile (31) is made by at least three tubes (32) with axial symmetrical sections connected between them by flanges (33, 34, 35), in a way to form an hollow extruded multifigure profile with a star shape symmetrical respect to a longitudinal axe, and that it is splitted cutting in the middle the flange (33) and/or the flange (34) and/or the flange (35).

5. a tridimensional frame following the claims 2 or 3
characterised by the fact that
the flange (22; 33,34,35) in the area where it is cutted, it is removed along all its length.

6. a tridimensional frame following the claim 1.
characterised by the fact that
two or more elementary structural members (2,3,4) are symmetric in couple in respect to a neutral vertical plane of symmetry of the frame (1) and that the elementary structural members (2,3,4) of each couple are connected between them in the neutral plane of symmetry of the frame (1).

7. a tridimensional frame following the claim 1.
characterised by the fact that
the connection of the elementary structural members (2,3,4) is made inserting a bush (43) in the hollow part of each free end, having the extemal section of a shape corresponding to the intemal section of the two profiles to be connected and which is fixed at both hollow ends. (21,32).

8. a tridimensional frame following the claim 7.
characterised by the fact that
the bush (43) is fixed in the hollow parts (21, 32) by mean of annular welding and/or by spot welding and/or bonding and/or fixing bolts, rivets and similar.

9. a tridimensional frame following the claims 1 and 2 and more precisely for a motor car
characterised by the fact that
it is formed by two frame-halves joined together in their neutral pount of the vehicle and each made by only two elementary structural members comprising only two tubes having an axial symmetrical section (21) connected by a flange (10), one of which, indicated as (2), makes the side rails together with the peripheral structure of the floorpan and the basis of the front and rear pillars of the tridimensional frame, while the other member (3) is used to complete the door ring, to give the three quarters of the windscreen ring and to make the complete peripheral structure of the roof. (Fig. 1).

10. a tridimensional frame following the claim 1.
characterised by the fact that
the extruded hollow multifigure profles (10,31) are made of light metal, for example of aluminium and its alloys.

11. a tridimensional frame following the claim 1.
characterised by the fact that
the extruded hollow multifigure profles (10,31) shows some integrated supports or flanges to fix some specific components separate from the frame.

12. a tridimensional frame following the claim 1.
characterised by the fact that
the extruded hollow multifigure profles (10,31) are used to carry different liquids as lubricants or cooling or other service liquids in thier cavities having a shape of a tube.(21,32).
